# EUROPEAN PATENT SPECIFICATION

(11) **EP 2 832 449 B1**
(45) Date of publication and mention of the grant of the patent: **02.11.2016**
(21) Application number: 12872600.7
(22) Date of filing: 12.09.2012
(51) Int. Cl.: B04C 5/103, B01D 45/12

(54) **AXIAL FLOW-TYPE CYCLONE DUST COLLECTION DEVICE**
AXIALFLUSSARTIGE ZYKLONSTAUBSAMMELVORRICHTUNG
DISPOSITIF DE COLLECTE DE POUSSIÈRE CYCLONIQUE DE TYPE À ÉCOULEMENT AXIAL

(30) Priority: 30.03.2012 KR 20120032839
(43) Date of publication of application: 04.02.2015
(73) Proprietor: Son, Dong-Won, 84, Daedong-ro, Sasang-gu Busan 617-770 (KR); Bai, Xu, Changning District Shanghai 200335 (CN); Son, Jeong-hwa, 84, Daedong-ro, Sasang-gu Busan 617-770 (KR)
(72) Inventor: SON, Dong-won, Busan 617-770 (KR)
(74) Representative: Grey, Ian Michael
(86) International application number: PCT/KR2012/007322
(87) International publication number: WO 2013/147373

(56) References cited:
- WO-A1-2008/152203
- JP-A- S55 119 458
- KR-B1- 100 875 966
- KR-U- 20010 000 297
- KR-U- 20110 011 495
- US-A- 5 178 656

## Description

### FIELD OF THE INVENTION

The present invention relates to an axial flow-type cyclone dust collection device.

### BACKGROUND ART

In a general axial flow-type cyclone dust collection device, dust gas is introduced in an axial direction and undergoes de-dusting, and then de-dust gas is discharged along the axial direction. Dust gas introduced into a main body of the dust collector through an inlet pipe becomes swirled while passing through a swirl guide vanes installed at an entrance. Heavy dust particles of the dust gas, which becomes swirled in an entrance upper portion of the main body, are discharged through a dust outlet provided in the cylinder wall while swirling and moving downstream along a cylinder wall by centrifugal force, and then collected in a sealed dust collection bag. The de-dust gas is discharged to the outside of the dust collection device via the outlet pipe provided along the axial direction of the dust collection device.

However, in such a conventional axial flow-type cyclone dust collection device as for example disclosed in US 5 178 656, the swirl guide vanes for swirling flow of the dust gas do not give a sufficient swirl centrifugal force to the dust gas, but rather offer excessive resistance to the flow of the dust gas, thereby causing a loss of pressure and lowering an efficiency of collecting dust.

### DISCLOSURE OF INVENTION

An aspect of the invention is to provide a dust collection device in which a loss of static pressure is decreased and a dust collection efficiency is improved.

The foregoing and/or other aspects of the present invention are achieved by providing an axial flow-type cyclone dust collection device including: a main body configured to include a turning cylinder portion where dust gas is swirled and moved, a dust gas inlet pipe and a de-dust gas discharge pipe arranged in front and rear ends of the turning cylinder portion along an axial line, and a dust collection port provided in an rear end area of the turning cylinder portion and guiding centrifuged dust to be discharged, wherein an inner diameter of the turning cylinder portion is 1.5 times to 1.6 times larger than an inner diameter of the inlet pipe; and a plurality of guide vanes configured to be arranged between the dust gas inlet pipe and the turning cylinder portion in the main body, give a swirling centrifugal force to dust gas introduced through the inlet pipe, and be radially arranged with a vane angle changing from a lead-in angle of 0° to 5° in a front end portion to a discharge angle of 75° to 80° in a rear end portion with respect to the axial line of the turning cylinder portion.

The axial flow-type cyclone dust collection device may further include a con-shaped diffuser arranged between the inlet pipe and the guide vanes and having a vertex facing toward the inlet pipe, thereby giving force to the introduced dust gas so as to be radially diffused outward and more swirled and increasing efficiency of collecting dust.

Also, the inlet pipe may have a length 1.4 to 1.6 times greater than an inner diameter of the inlet pipe, thereby allowing introduced turbulent dust gas to have laminar flow without excessively increasing the total length of the device.

The turning cylinder portion may have a length 1.5 to 2.0 times greater than an inner diameter of the inlet pipe in order to secure dust gas to be sufficiently swirled.

### EFFECTS OF THE INVENTION

With the foregoing configuration, there is provided a dust collection device in which a static pressure loss is small and a dust collection efficiency is improved since the mutual geometric relationship between components is optimized.

### BRIEF DESCRIPTION OF THE DRAWINGS

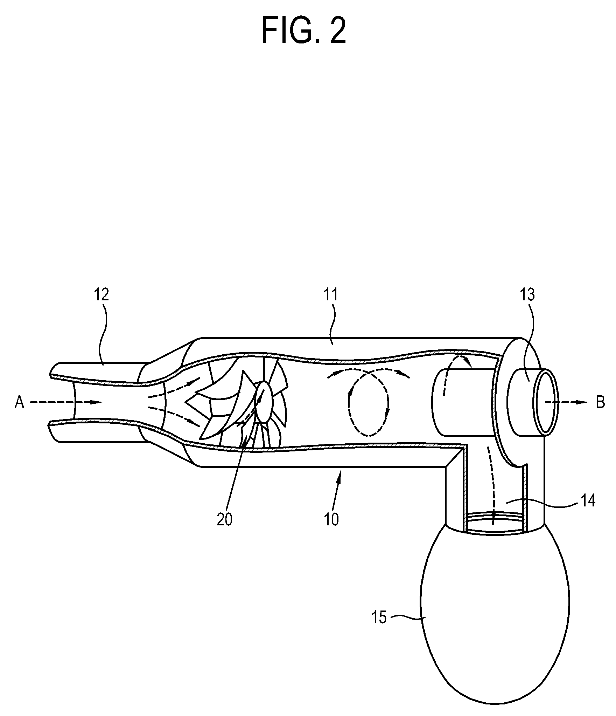

FIGs. 1 and 2 are a longitudinal-section view and a partial cut-open perspective view of an axial flow-type cyclone dust collection device according to an exemplary embodiment.
FIG. 3 shows a cross-section view (a) and a perspective view (b) of guide vanes.
FIG. 4 is a graph showing change in a dust collection efficiency and a pressure loss in accordance with ratios of an inner diameter of a turning cylinder portion to an inner diameter of an inlet.
FIG. 5 is a graph showing change in a dust collection efficiency and a pressure loss in accordance with discharge angles of guide vanes.

### MODES FOR CARRYING OUT THE INVENTION

Hereinafter, exemplary embodiments will be described in more detail with reference to accompanying drawings.

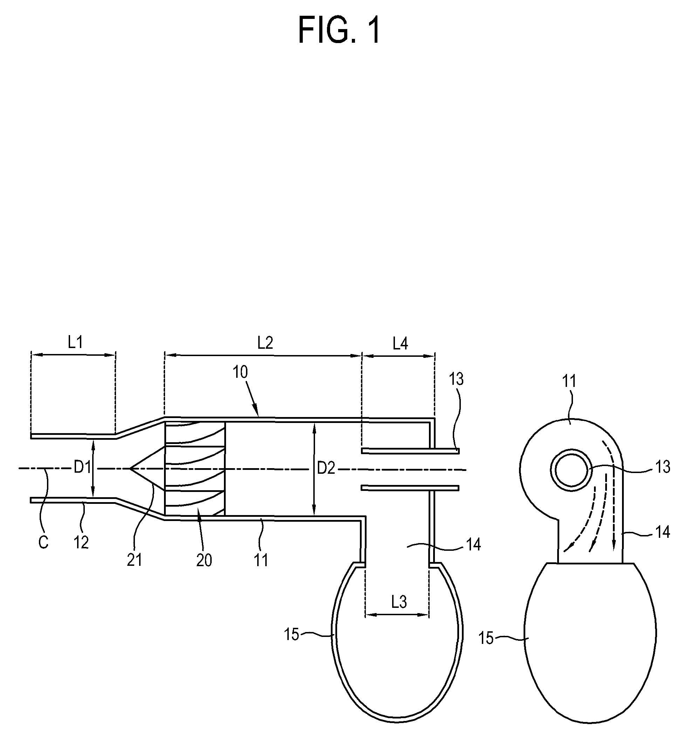

FIG. 1 is a longitudinal-section view of an axial flow-type cyclone dust collection device according to an exemplary embodiment. As shown in FIG. 1, the axial flow-type cyclone dust collection device includes a main body 10 and guide vanes 20 accommodated in the main body 10.

The main body 10 includes a turning cylinder portion 11 where dust gas is swirled and moved, a dust gas inlet pipe 12 and a de-dust gas discharge pipe 13 which are arranged along an axis C at front and rear ends of the turning cylinder portion 11, and a dust collection port 14 which is provided in a rear end area of the turning cylinder portion 11 and guiding centrifuged dust to be discharged.

The guide vanes 20 are arranged in between the dust gas inlet pipe 12 and the turning cylinder portion 11 within the main body 10 in order to give a swirling centrifugal force to the dust gas introduced into the inlet pipe 12.

Dust gas introduced into the axial flow-type cyclone dust collection device has a flow speed of about 7.0~9.0 m/sec, and passes through a transportation pipe bent many times or having various curvatures until reaching the inlet pipe 12 so that the dust gas reaching the inlet pipe 12 can have turbulent or swirly flow. If such turbulent or swirly dust gas directly hits the guide vanes 20, the swirly flow formed in the guide vanes 20 is biased toward a position at a certain azimuth angle and thus has an uneven distribution of speed, thereby lowering a dust collection efficiency.

However, as above, the dust gas introduced in the form of the turbulent or swirly flow is changed to have laminar flow, where speed and density are constant, while passing through the inlet pipe 12 having a proper straight length. On the other hand, if the inlet pipe 12 is too long, fluid resistance becomes larger and pressure loss is increased, thereby lowering the dust collection efficiency. It was obtained through various examples that the preferable length of the inlet pipe 12 is 1.4 to 1.6 times greater than the inner diameter of the inlet pipe 12.

Behind the inlet pipe 12, a cone-shaped diffuser 21 having a vertex facing toward the inlet pipe 12 and coupled to a front end portion of the guide vanes 20 is provided. Dust gas passing through the inlet pipe 12 is radially diffused at the vertex of the cone-shaped diffuser 21 along an inclined surface toward an outer wall, and thus introduced into the guide vanes 20.

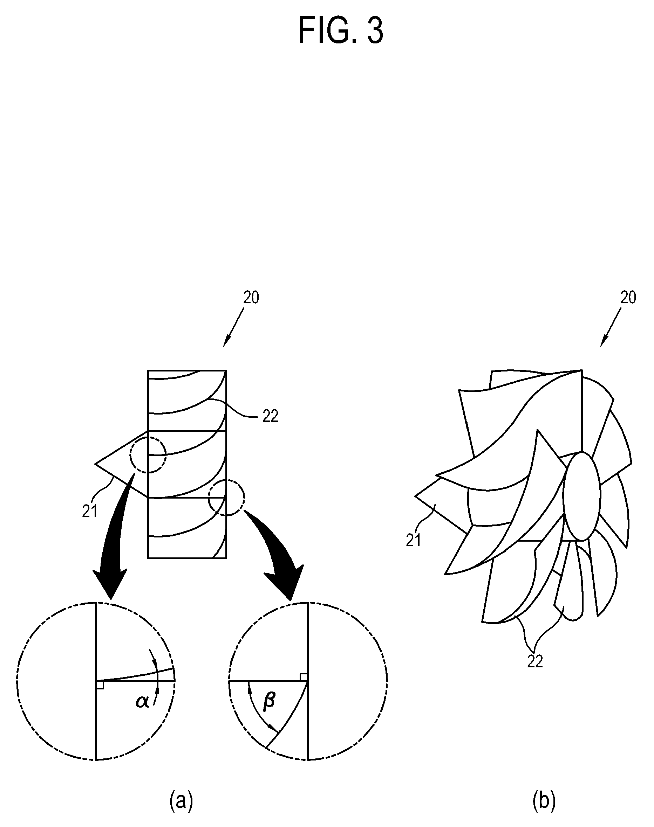

A plurality of guide vanes 20 are radially arranged, and, as shown in FIG. 3, have a rapid discharge angle β of 75° to 80° in a rear end portion of the guide vanes 20 starting from a gentle lead-in angle α of 0° to 5° in a front end portion with respect to an axial line c.

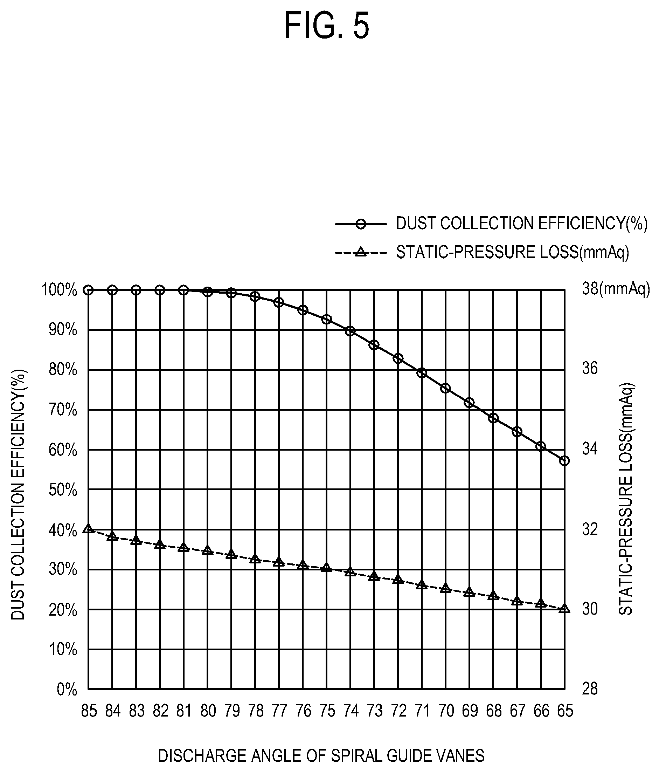

FIG. 5 is a graph showing change in a dust collection efficiency and a pressure loss in accordance with various discharge angles of the guide vanes 20. As shown in the graph, the best result was shown within a section where the discharge angle β ranges from 75° to 80°, in which the static pressure has a minimum loss of about 1mmAq and the dust collection efficiency is maintained by 90% or higher.

Dust gas passing through the guide vanes 20 moves toward a back end while being swirled in the turning cylinder portion 11. In order to make particles of the swirled dust gas receive a centrifugal force and be separated from the swirly flow, a swirly speed and a swirly distance (number of revolutions) have to be secured. If the speed of the flow passing through the inlet pipe 12 is constant, the dust collection efficiency is susceptible to the swirly speed and distance in accordance with a relative size between the inner diameter D1 of the inlet pipe 12 and the inner diameter D2 of the turning cylinder portion 11.

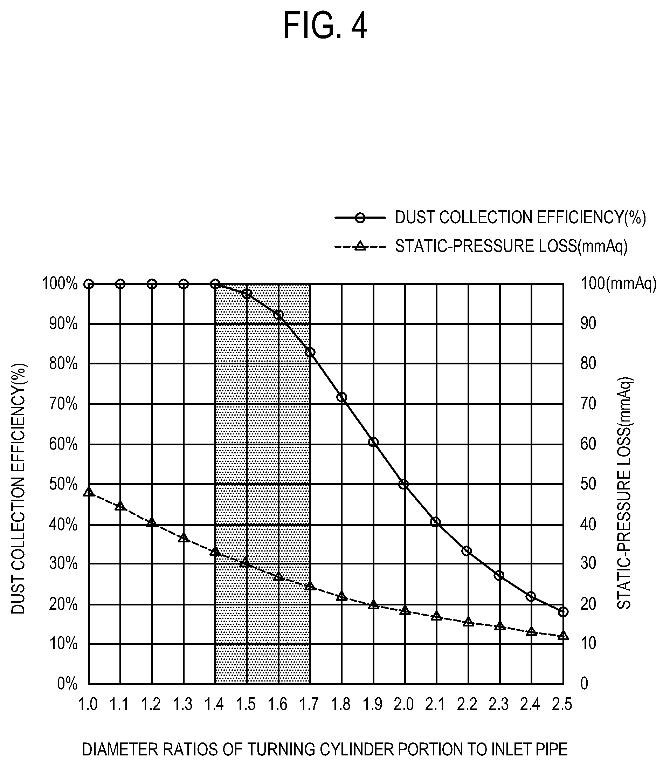

FIG. 4 is a graph showing change in the dust collection efficiency and the static-pressure loss in accordance with ratios of the inner diameter D2 of the turning cylinder portion to the inner diameter D1 of the inlet. The graph shows a good result in a section where the inner diameter D2 of the turning cylinder portion 11 is 1.4 to 1.7 times greater than the inner diameter D1 of the inner pipe 12, and the best result in a section where D2 is 1.5 to 1.6 times larger than D1, so that the static-pressure loss can be minimized and the dust collection efficiency can be maintained by 80% or higher.

Also, the length L2 of the turning cylinder portion 11 is the swirly distance of the swirly flow, i.e., the number of swirling times, which serves as an influential variable in that dust particles separated by receiving the centrifugal force from the swirly flow are moved to the dust collection port 14 in the rear end while being swirled along the wall of the turning cylinder portion 11. From various experimental results with regard to the number of swirling times of the swirly flow within the turning cylinder portion 12, it was showed that the most preferable number of swirling times ranges from 1.1 to 1.5 turns. To make the number of swirling times range from 1.1 to 1.5 turns, the length L2 of the turning cylinder portion is 1.5 to 2.0 times larger than the inner diameter D1 of the inlet pipe 12.

As above, the dust separated by receiving the centrifugal force from the swirly flow moves while being swirled along the inner wall of the turning cylinder portion 11, and is collected by inertial force into a dust-collection bag 15 via the dust collection port 14 provided in the back end of the turning cylinder portion 11. The dust collected in the dust collection bag 15 may be manually emptied, or removed by replacing the dust collection bag 15.

The dust collection port 14 is provided in the rear end of the turning cylinder portion 11 and has a rectangular shape of which two opposite sides are parallel to a tangential direction and the other two sides are parallel to the axial line C. The length of one side of the dust collection port 14 may be 50~60% of the inner diameter D2 of the turning cylinder portion 11. The experimental results showed that even dust particles in the central flow receiving a weak centrifugal force when high concentration dust gas is momentarily introduced are easily movable to the dust collection bag 15 under the condition that the length of one side of the dust collection port 14 is 50~60% of the inner diameter D2 of the turning cylinder portion 11.

As above, the centrifugal force of the turning cylinder portion 11 separates dust particles from the dust gas introduced into the dust collection device, and the separated dust particles are collected and removed through the dust collection port 14. Then, the de-dust gas is discharged to the outside through the de-dust gas discharge pipe 13.

The de-dust gas discharge pipe 13 is installed in an axial line rear end of the turning cylinder portion 11 along the axial line C, and inward extended in the inside of the turning cylinder portion 11 beyond the area of the dust collection port 14. At this time, if an inward length L4 of the de-dust gas discharge pipe 13 is shorter than a one-side length L3 of the dust collection port, the dust collection efficiency is decreased since the swirly flow flowing out in a reverse direction toward the de-dust gas discharge pipe 13 has a large turning angle. On the other hand, if the inward length L4 of the de-dust gas discharge pipe 13 is longer than the one-side length L3 of the dust collection port 14, dust is likely to be collected in a front end portion of the de-dust gas discharge pipe 13 and an entrance of the dust collection port 14.

Therefore, as experimental results with regard to various inward lengths L4 of the de-dust gas discharge pipe 13 installed in the turning cylinder portion 11, dust collected in the entrance of the dust collection port 14 is minimized without interfering with a reverse swirly flow of the de-dust gas when the inward length L4 of the de-dust gas discharge pipe 13 is longer by 18~22% than the one-side length L3 of the dust collection port 14.

## Claims

1. An axial flow-type cyclone dust collection device comprising:
a main body (10) configured to comprise a turning cylinder portion (11) where dust gas is swirled and moved, a dust gas inlet pipe (12) and a de-dust gas discharge pipe (13) arranged in front and rear ends of the turning cylinder portion along an axial line, and a dust collection port (14) provided in an rear end area of the turning cylinder portion and guiding centrifuged dust to be discharged, wherein an inner diameter (D2) of the turning cylinder portion is 1.5 times to 1.6 times larger than an inner diameter (D1) of the inlet pipe; and
a plurality of guide vanes (24) configured to be arranged between the dust gas inlet pipe and the turning cylinder portion in the main body, give a swirling centrifugal force to dust gas introduced through the inlet pipe, and be radially arranged with a vane angle changing from a lead-in angle (α) of 0° to 5° in a front end portion to a discharge angle (β) of 75° to 80° in a rear end portion with respect to the axial line of the turning cylinder portion.

2. The axial flow-type cyclone dust collection device according to claim 1, further comprising a cone-shaped diffuser arranged between the inlet pipe and the guide vanes and having a vertex facing toward the inlet pipe.

3. The axial flow-type cyclone dust collection device according to claim 1, wherein the inlet pipe has a length 1.4 to 1.6 times greater than an inner diameter of the inlet pipe.

4. The axial flow-type cyclone dust collection device according to claim 1, wherein the turning cylinder portion has a length 1.5 to 2.0 times greater than an inner diameter of the inlet pipe.

5. The axial flow-type cyclone dust collection device according to claim 1, wherein the de-dust gas discharge pipe placed inside the turning cylinder portion is lengthwise extended beyond an area of the dust collection port.

## Patentansprüche

1. Axialflussartige Zyklonstaubsammelvorrichtung, umfassend:
Einen Hauptkörper (10), der konfiguriert ist, einen Drehzylinderabschnitt (11) zu umfassen, wo Staubgas verwirbelt und bewegt wird,
ein Staubgaszuführungsrohr (12) und ein Entstaubungs-Gasentladungsrohr (13), die in vorderen und hinteren Enden des Drehzylinderabschnitts entlang einer axialen Linie angeordnet sind,
und eine Staubsammelöffnung (14), die in einem Bereich des hinteren Endes des Drehzylinderabschnitts bereitgestellt ist und zu entladenden zentrifugierten Staub führt, wobei ein Innendurchmesser (D2) des Drehzylinderabschnitts 1,5 Mal bis 1,6 Mal größer als ein Innendurchmesser (D1) des Zuführungsrohrs ist;
und
eine Vielzahl von Leitschaufeln (24), die konfiguriert sind, zwischen dem Staubgaszuführungsrohr und dem Drehzylinderabschnitt im Hauptkörper angeordnet zu werden, vermitteln dem Staubgas, das durch das Zuführungsrohr eingeleitet wird, eine wirbelnde Zentrifugalkraft, und die radial mit einem Schaufelwinkel angeordnet werden sollen, der sich von einem Einführungswinkel (α) von 0° bis 5° in einem vorderen Endabschnitt auf einen Entladewinkel (β) von 75° bis 80° in einem hinteren Endabschnitt in Bezug auf die axiale Linie des Drehzylinderabschnitts ändert.

2. Axialflussartige Zyklonstaubsammelvorrichtung nach Anspruch 1, die ferner einen kegelförmigen Diffuser umfasst, der zwischen dem Zuführungsrohr und den Leitschaufeln angeordnet ist und einen dem Zuführungsrohr zugewandten Vertex aufweist.

3. Axialflussartige Zyklonstaubsammelvorrichtung nach Anspruch 1, wobei das Zuführungsrohr eine Länge aufweist, die 1,4 bis 1,6 Mal größer als ein Innendurchmesser des Zuführungsrohrs ist.

4. Axialflussartige Zyklonstaubsammelvorrichtung nach Anspruch 1, wobei der Drehzylinderabschnitt eine Länge aufweist, die 1,5 bis 2,0 Mal größer als ein Innendurchmesser des Zuführungsrohrs ist.

5. Axialflussartige Zyklonstaubsammelvorrichtung nach Anspruch 1, wobei das im Innern des Drehzylinderabschnitts platzierte Entstaubungs-Gasentladungsrohr in der Längsrichtung über einen Bereich der Staubsammelöffnung hinaus verlängert ist.

## Revendications

1. Dispositif de collecte de poussières cyclonique de type à écoulement axial, comprenant :
un corps principal (10) configuré de façon à comporter une portion à cylindre rotatif (11) où le gaz à poussières est mis en tourbillonnement et en déplacement, une tubulure d'admission de gaz à poussières (12) et une tubulure de décharge de gaz dépoussiéré (13) agencées dans des extrémités avant et arrière de la portion à cylindre rotatif le long d'une ligne axiale, et un orifice de collecte de poussières (14) prévu dans une zone d'extrémité arrière de la portion à cylindre rotatif et guidant les poussières centrifugées devant être déchargées, cas dans lequel un diamètre interne (D2) de la portion à cylindre rotatif est plus grand de 1,5 fois à 1,6 fois qu'un diamètre interne (D1) de la tubulure d'admission ; et
une pluralité d'aubes de guidage (24) configurées de façon à être agencées entre la tubulure d'admission de gaz à poussières et la portion à cylindre rotatif dans le corps principal, à donner une force centrifuge tourbillonnante au gaz à poussières introduit à travers la tubulure d'admission, et à être agencées radialement suivant un angle d'aube qui change depuis un angle d'attaque (α) de 0° à 5° dans une portion d'extrémité avant jusqu'à un angle de décharge (β) de 75° à 80° dans une portion d'extrémité arrière par rapport à la ligne axiale de la portion à cylindre rotatif.

2. Dispositif de collecte de poussières cyclonique de type à écoulement axial selon la revendication 1, comprenant en outre un diffuseur en forme de cône lequel est agencé entre la tubulure d'admission et les aubes de guidage, et possédant un sommet qui est dirigé vers la tubulure d'admission.

3. Dispositif de collecte de poussières cyclonique de type à écoulement axial selon la revendication 1, la tubulure d'admission ayant une longueur qui est plus grande de 1,4 à 1,6 fois qu'un diamètre interne de la tubulure d'admission.

4. Dispositif de collecte de poussières cyclonique de type à écoulement axial selon la revendication 1, la portion à cylindre rotatif ayant une longueur qui est plus grande de 1,5 à 2,0 fois qu'un diamètre interne de la tubulure d'admission.

5. Dispositif de collecte de poussières cyclonique de type à écoulement axial selon la revendication 1, la tubulure de décharge de gaz dépoussiéré placée à l'intérieur de la portion à cylindre rotatif étant prolongée dans le sens de la longueur au-delà d'une zone de l'orifice de collecte de poussières.
